# EUROPÄISCHE PATENTSCHRIFT

(11) **EP 3 094 437 B1**
(45) Veröffentlichungstag und Bekanntmachung des Hinweises auf die Patenterteilung: **08.11.2017**
(21) Anmeldenummer: 15704723.4
(22) Anmeldetag: 15.01.2015
(51) Int. Cl.: B23B 31/02, B23B 31/117, B23Q 11/10

(54) **WERKZEUGAUFNAHME MIT EINEM DÜSENRING**
TOOL HOLDER WITH A NOZZLE RING
PORTE-OUTIL AVEC UNE BAGUE DE BUSE

(30) Priorität: 15.01.2014 DE 102014200582
(43) Veröffentlichungstag der Anmeldung: 23.11.2016
(73) Patentinhaber: Helmut Diebold GmbH&Co. Goldring-Werkzeugfabrik, 72417 Jungingen (DE)
(72) Erfinder: DIEBOLD, Hermann, 72379 Hechingen (DE)
(74) Vertreter: Pfiz, Thomas
(86) Internationale Anmeldenummer: PCT/EP2015/050637
(87) Internationale Veröffentlichungsnummer: WO 2015/107101

(56) Entgegenhaltungen:
- EP-A1- 1 640 091
- EP-A1- 2 572 824
- WO-A1-2010/023412
- WO-A1-2013/127606
- DE-A1- 4 326 023
- DE-A1-102008 044 996
- JP-A- 2003 266 274
- JP-A- 2004 148 429
- JP-A- 2010 142 889
- US-A1- 2004 013 480
- US-B2- 7 785 046

## Beschreibung

Die Erfindung betrifft eine Werkzeugaufnahme gemäß dem Oberbegriff des Anspruchs 1 mit einem um eine Drehachse rotierend antreibbaren, vorzugsweise als Schrumpffutter ausgebildeten Spannfutter, das einen über eine Stirnöffnung zugänglichen hohlen Spannbereich zum Einspannen des Werkzeugschafts eines Rotationswerkzeugs aufweist, und einem stirnseitig an dem Spannfutter angeordneten Düsenring, der Düsenbohrungen zum Beaufschlagen des Rotationswerkzeugs mit einem flüssigen und/oder gasförmigen Medium aufweist. Eine derartige Werkzeugmaschine ist aus dem Dokument JP 2010 14 889 A bekannt. Eine ähnliche Werkzeugaufnahme ist aus der US-PS 7,785,046 bekannt. Dort wird ein mit einem Düsenkranz versehender Ringeinsatz vorgeschlagen, der in einer Stirnnut eines radiale Klemmschrauben aufweisenden Werkzeughalters eingesetzt ist. Durch die Innenflanke der Stirnnut wird ein Abstand zu dem Werkzeugschaft geschaffen, wodurch die Zentrifugalkraft auf das durchgeleitete Medium erhöht wird. Dies kann zu einer ungewollten Aufweitung des Düsenstrahls und einer Trennung von Bestandteilen des Mediums führen. Zudem muss die Stirnnut passgenau sein, um Undichtigkeiten zu vermeiden, und die Wandstärke muss hinreichend dimensioniert sein, um Bruchschäden zu vermeiden, was insbesondere bei Spannfuttern problematisch ist.

Ausgehend hiervon liegt der Erfindung die Aufgabe zugrunde, die im Stand der Technik bekannten Werkzeughalter weiter zu verbessern und mit möglichst einfachen Mitteln zu gewährleisten, dass bei einfacher Herstellbarkeit ein zuverlässiger Einsatz für die Kühlschmierstoffeindüsung bei Spannfuttern und vor allem Schrumpffuttern auch bei unterschiedlichen Werkzeugdurchmessern sichergestellt ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den Düsenring möglichst nahe an der Drehachse anzuordnen. Dementsprechend wird erfindungsgemäß vorgeschlagen, dass der Düsenring in einer die Stirnöffnung stufenförmig erweiternden Ringaussparung des Spannfutters aufgenommen ist, wobei der Düsenring über Verbindungsmittel in der Ringaussparung fixiert ist und mit seinem Innenmantel eine radiale Begrenzung für das Einführen des Rotationswerkzeugs bildet. Damit lässt sich der Düsenring unabhängig von dem Werkzeug nahe der Drehachse fest in dem Spannfutter integrieren, wobei der Innenmantel des Düsenrings ggf. für die Werkzeugzentrierung genutzt werden kann. Dies ist besonders vorteilhaft für Schrumpffutter, bei denen der Werkzeugschaft durch Einschrumpfen eingespannt wird und der Futterkörper durch induktive Erhitzung in seiner Dimension häufig verändert wird. Zudem wird auch die Montage und gegebenenfalls ein Austausch des Düsenrings vereinfacht, ohne dass besondere Anforderungen an die Kontur des Spannfutters bestehen. Ein einfacher Einsatz ist grundsätzlich bei allen Spannsystemen mit Aufnahmebohrung möglich.

Vorteilhafterweise ist der Düsenring über eine lösbare Schraubverbindung oder eine unlösbare Stoffschlussverbindung als Verbindungsmittel unabhängig von dem Rotationswerkzeug fest mit dem Spannfutter verbunden.

In einer auch für größere Durchmesser vorteilhaften Ausführung kann der Düsenring ein in ein Innengewinde des Spannfutters einschraubbares Außengewinde aufweisen. Hierbei wird die Montage erleichtert, wenn der Innenmantel des Düsenrings ein Formschlussprofil, insbesondere ein Mehrkant- oder Torxprofil für einen verdrehgesicherten Eingriff eines Montagewerkzeugs aufweist.

Alternativ ist es auch von Vorteil, wenn der Düsenring vorzugsweise an seinem Außenmantel über eine Klebe- oder Schweißverbindung unlösbar mit dem Spannfutter verbunden ist. Dies lässt sich vorteilhaft dadurch realisieren, dass der Außenmantel des Düsenrings und der Außenrand der Ringaussparung eine insbesondere V-förmige Ringkerbe zur Aufnahme einer Schweißnaht begrenzen.

Eine weitere vorteilhafte Ausgestaltung sieht vor, dass der Düsenring an seiner hinteren Stirnseite eine nut- oder stufenförmige Ringvertiefung zum Einleiten und Verteilen des Mediums in die Düsenbohrungen aufweist. Dadurch kann der Ringverteiler ohne unnötiges Totvolumen besonders einfach integriert werden.

Für eine gleichmäßige, gezielte Kühlschmierstoffeindüsung ist es vorteilhaft, wenn der Düsenring eine Mehrzahl von zwischen seiner hinteren Stirnseite und seiner freien vorderen Stirnseite durchgehende, in Umfangsrichtung verteilte Düsenbohrungen aufweist, und wenn die Düsenbohrungen in Durchflussrichtung des Mediums gesehen zu der Drehachse hin ggf. mit unterschiedlichen Neigungswinkeln geneigt sind.

Um den gezielten Einsatz des Mediums weiter zu verbessern, ist es günstig, wenn die Austrittsöffnungen der Düsenbohrungen in einem radialen Abstand von dem Innenmantel des Düsenrings und damit auch von dem Werkzeugschaft angeordnet sind und das Medium unter einem spitzen Winkel zu der Drehachse ausstoßen. Damit wird auch erreicht, dass die Kontur des Innenmantels von den Düsenbohrungen freibleibt und nicht durchbrochen wird.

Zur Erzielung einer möglichst hohen Geschwindigkeit der Sprühstrahlen und Vermeidung einer Strahlaufweitung unter Zentrifugalkraft auch bei hohen Drehzahlen ist es von Vorteil, wenn das Spannfutter in einem den Spannbereich umschließenden Spannabschnitt einen durch mindestens eine Längsbohrung gebildeten Zuleitungskanal für das Medium aufweist, dessen Querschnitt größer als die Summe der Querschnitte der Düsenbohrungen ist.

Vorteilhafterweise bildet der Düsenring an seiner hinteren Stirnseite eine axiale Dichtfläche gegen Durchtritt des Mediums in den Spannbereich. Bevorzugt wird die Abdichtung dadurch erreicht, dass die Dichtfläche des Düsenrings gegen eine Stufenfläche der Ringaussparung des Schrumpffutters direkt anliegt, so dass kein gesonderter Dichtungseinsatz erforderlich ist.

Um Störkonturen zu vermeiden, ist es auch von Vorteil, wenn der Düsenring mit seiner vorderen Stirnseite bündig mit der Stirnfläche des Spannfutters abschließt.

Die Einführung des Werkzeugschafts lässt sich dadurch vereinfachen, dass der Innenmantel des Düsenrings ein Durchmesserübermaß gegenüber dem Spannbereich aufweist.

Vorteilhafterweise sind die Düsenbohrungen durch Bohrungskanäle mit jeweils gleichbleibendem konstantem Durchmesser gebildet, so dass keine Strömungshindernisse gebildet werden.

Im Folgenden wird die Erfindung anhand der in der Zeichnung schematisch dargestellten Ausführungsbeispiele näher erläutert. Es zeigen:
- Fig. 1: eine Werkzeugaufnahme mit einem Schrumpffutter und einem darin fixierten Düsenring zur Durchleitung von Kühlschmierstoff in perspektivischer Ansicht,
- Fig. 2: die Werkzeugaufnahme nach Fig. 1 im Axialschnitt;
- Fig. 3: eine Ausschnittsvergrößerung der Fig. 2 im Bereich des eingeschraubten Düsenrings mit angedeutetem Werkzeugschaft;
- Fig. 4: eine weitere Ausführungsform mit eingeschweißtem Düsenring in einer Fig. 3 entsprechenden Darstellung.

Der in der Zeichnung gezeigte Werkzeugkopf 10 besteht im Wesentlichen aus einem Schrumpffutter 12 zum Einspannen des Werkzeugschafts 14 eines um eine Drehachse 15 drehenden Rotationswerkzeugs 16, beispielsweise eines Bohrers oder Fräser, und einem stirnseitig in dem Schrumpffutter 12 fixierten Düsenring 18, welcher Düsenbohrungen 20 zum Beaufschlagen des Rotationswerkzeugs 16 mit Kühlschmierstoff in Form eines flüssigen und/oder gasförmigen Mediums aufweist.

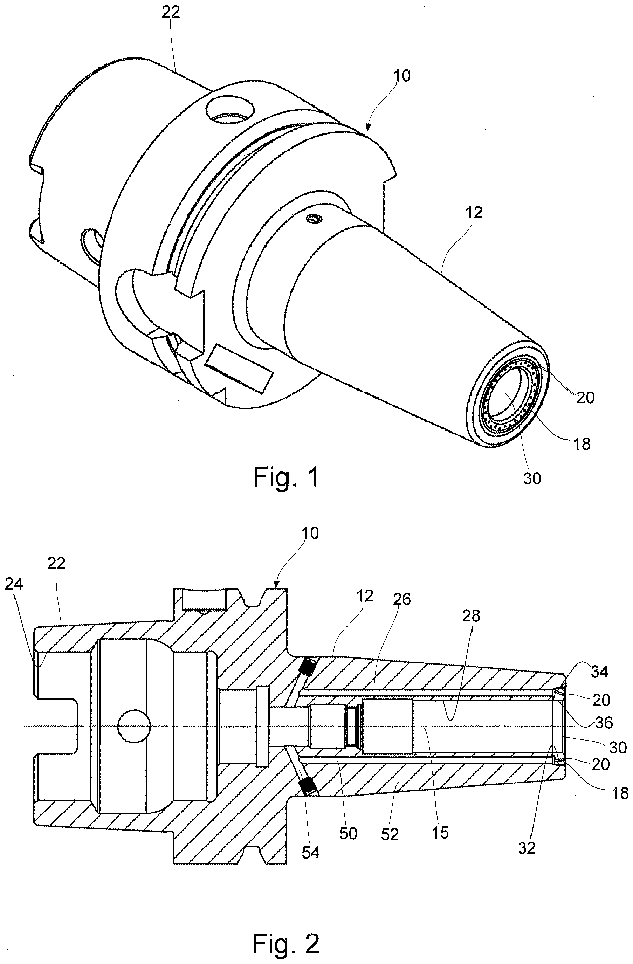

Wie am besten aus Fig. 1 und 2 ersichtlich, besitzt der Werkzeugkopf 10 einen Hohlschaftkegel 22 zum Andocken an eine rotierende Maschinenspindel. Dessen Hohlraum 24 dient zugleich zur maschinenseitigen Zuführung von Kühlschmierstoff, der über ein Zuleitungskanalsystem 26 im Schrumpffutter 12 durch die Düsenbohrungen 20 des Düsenrings 18 hindurch auf das Rotationswerkzeug 16 zum Kühlen, Schmieren und Freiräumen des Arbeitsbereichs eingedüst werden kann.

Das Schrumpffutter 12 umfasst als Hülsenpartie einen zylindrisch hohlen Spannbereich 28, der über eine Stirnöffnung 30 am vorderen Stirnende des Schumpffutters 12 zum Einführen des Werkzeugschafts 14 zugänglich ist. Der Spannbereich 18 besitzt einen etwas geringeren Nenndurchmesser als der Werkzeugschaft 14, so dass dieser in an sich bekannter Weise durch (induktives) Erwärmen des Schumpffutters 12 klemmend einspannbar ist. Im eingeschrumpften Zustand wird der Werkzeugschaft 14 zur Übertragung eines Drehmoments auf den vorderen Arbeitsabschnitt des Rotationswerkzeugs 16 reibschlüssig im Presssitz drehfest gehalten. Zum Ausschrumpfen wird ebenfalls nur der das Schumpffutter 12 einseitig erwärmt, bis die thermische Ausdehnung den Werkzeugschaft 14 wieder zur Entnahme freigibt.

In jedem Fall verbleibt der Düsenring 18 in einer die Stirnöffnung 30 radial erweiternden Ringaussparung 32 des Schumpffutters 12 über Verbindungsmittel 34 fest fixiert. Der Düsenring 18 bildet somit mit seinem Innenmantel 36 eine radiale Begrenzung bzw. Führung für das Zentrieren bzw. Einführen des Werkzeugschafts 14. Zur Vorzentrierung beim Einschrumpfen ist es im Sinne einer sogenannten Vorweite denkbar, dass der Innenmantel 36 ein Übermaß im lichten Durchmesser gegenüber dem noch nicht erwärmten Spannbereich 28 aufweist.

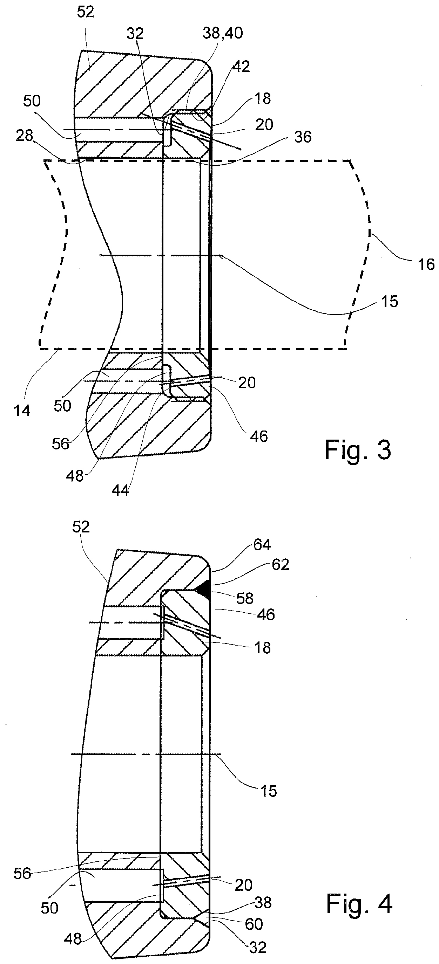

In der in Fig. 3 vergrößert gezeigten Ausführungsform weist der kreiszylindrische Düsenring 18 an seinem Außenmantel 38 ein Außengewinde 40 auf, das in ein Innengewinde 42 in der stirnseitigen Stufenbohrung bzw. Ringaussparung 32 des Spannfutter 12 eingreift. Dabei ist es denkbar, dass der Innenmantel 36 eine von der Kreisform abweichende Passkontur für den komplementären Eingriff eines Montagewerkzeugs zum Erleichtern des Ein- und Ausschraubens aufweist (nicht gezeigt).

Wie auch aus Fig. 1 erkennbar, sind die Düsenbohrungen 20 in Umfangsrichtung des Düsenrings 18 verteilt, wobei abwechselnd zwei Bohrungsausrichtungen mit unterschiedlichem Neigungswinkel bezüglich der Drehachse vorgesehen sind. Die Düsenbohrungen 20 verlaufen dabei von der hinteren Stirnseite 44 zur freien vorderen Stirnseite 46 des Düsenrings 18, so dass die Mündungsöffnungen in einem radialen Abstand von dem Werkzeugschaft 14 angeordnet sind und das durchgeleitete Medium unter einem spitzen Winkel zu der Drehachse 15 ausgestoßen wird.

An seiner Innenseite 44 begrenzt der Düsenring 18 eine stufenförmige Ringvertiefung 48, die ein ringförmiges Verteilen des Kühlschmierstoffs auf die Eintrittsöffnungen der Düsenbohrungen 20 ermöglicht. Das futterseitige Einleiten des Kühlschmierstoffs erfolgt dabei über mindestens zwei Längsbohrungen 50 im Spannabschnitt 52 des Schrumpffutters 12, die einander diametral gegenüberliegen und jeweils über eine abgestopfte Querbohrung 54 mit Hohlraum 24 kommunizieren (Fig. 2). Die Ringvertiefung 48 wird durch einen inneren Bund 56 des Düsenrings 18 begrenzt, welcher gegen die Stufenfläche der Ringaussparung 32 des Schrumpffutters 12 anliegt und somit eine axiale Dichtfläche gegen den Durchtritt des Mediums in den Spannbereich 28 bildet.

Die lichten Querschnitte der Düsenbohrungen 32 können an das durchzuleitende Medium angepasst sein, um einen Ausstoß mit hoher Strömungsgeschwindigkeit zu erreichen; beispielsweise kann nur Luft, ein Flüssig-LuftGemisch oder auch nur eine Flüssigkeit durchgeleitet werden. Zweckmäßig ist der Summenquerschnitt der Längsbohrungen 50 des Zuleitungskanals 26 größer als die Summe der Querschnitte der Düsenbohrungen 20.

Das in Fig. 4 gezeigte Ausführungsbeispiel unterscheidet sich besonders dadurch, dass der Düsenring 18 über eine Schweißverbindung 58 unlösbar mit dem Spannabschnitt 52 des Schrumpffutters 12 verbunden ist. Zu diesem Zweck begrenzen der Außenmantel 38 des Düsenrings 18 und der Außenrand der Ringaussparung eine V-förmige Ringkerbe 60, in die eine Schweißnaht 62 durch Laserschweißen eingebracht ist. Dabei kann nach dem Laserschweißen durch Hartdrehen erreicht werden, dass der Düsenring mit seiner vorderen Stirnseite 46 bündig mit der Stirnfläche 64 des Spannfutters 12 abschließt.

Ein weiterer Unterschied der Ausführungsform nach Fig. 4 besteht darin, dass die Ringvertiefung 48 an der inneren bzw. hinteren Stirnseite des Düsenrings 18 durch eine flache Nut gebildet wird. Diese verhindert mit ihrer Außenflanke das Entstehen einer Tasche, in welcher sich vor allem bei sogenannter Mindermengenschmierung flüssiges Medium unter Einwirkung der Zentrifugalkraft ansammelt.

## Patentansprüche

1. Werkzeugaufnahme mit einem um eine Drehachse (15) rotierend antreibbaren, vorzugsweise als Schrumpffutter ausgebildeten Spannfutter (12), das einen über eine Stirnöffnung (30) zugänglichen hohlen Spannbereich (28) zum Einspannen des Werkzeugschafts (14) eines Rotationswerkzeugs (16) aufweist, und einem stirnseitig an dem Spannfutter (12) angeordneten Düsenring (18), der Düsenbohrungen (20) zum Beaufschlagen des Rotationswerkzeugs (16) mit einem flüssigen und/oder gasförmigen Medium aufweist, wobei der Düsenring (18) in einer die Stirnöffnung (30) stufenförmig erweiternden Ringaussparung (32) des Spannfutters (12) aufgenommen ist, wobei der Düsenring (18) über Verbindungsmittel (34) in der Ringaussparung (32) fixiert ist und mit seinem Innenmantel (36) eine radiale Begrenzung für das Einführen des Rotationswerkzeugs (16) bildet, **dadurch gekennzeichnet, dass** der Düsenring (18) an seiner hinteren Stirnseite (44) eine axiale Dichtfläche (56) gegen Durchtritt des Mediums in den Spannbereich (28) bildet, wobei die Dichtfläche (56) des Düsenrings (18) gegen eine Stufenfläche der Ringaussparung (32) direkt anliegt.

2. Werkzeugaufnahme nach Anspruch 1, **dadurch gekenntzeichnet,** dass der Düsenring (18) über eine lösbare Schraubverbindung oder eine unlösbare Stoffschlussverbindung als Verbindungsmittel (34) unabhängig von dem Rotationswerkzeug fest mit dem Spannfutter (12) verbunden ist.

3. Werkzeugaufnahme nach Anspruch 1 oder 2, **dadurch gekennzeichnet, dass** der Düsenring (18) ein in ein Innengewinde (42) des Spannfutters (12) einschraubbares Außengewinde (40) aufweist.

4. Werkzeugaufnahme nach einem der Ansprüche 1 bis 3, **dadurch gekennzeichnet, dass** der Innenmantel (36) des Düsenrings (18) ein Formschlussprofil, insbesondere ein Mehrkant- oder Torxprofil für einen verdrehgesicherten Eingriff eines Montagewerkzeugs aufweist.

5. Werkzeugaufnahme nach Anspruch 1 oder 2, **dadurch gekennzeichnet, dass** der Düsenring (18) vorzugsweise an seinem Außenmantel) (38) über eine Klebe- oder Schweißverbindung (58) unlösbar mit dem Spannfutter (12) verbunden ist.

6. Werkzeugaufnahme nach Anspruch 5, **dadurch gekennzeichnet, dass** der Außenmantel (38) des Düsenrings (18) und der Außenrand der Ringaussparung (32) eine insbesondere V-förmige Ringkerbe (60) zur Aufnahme einer Schweißnaht (62) begrenzen.

7. Werkzeugaufnahme nach einem der Ansprüche 1 bis 6, **dadurch gekennzeichnet, dass** der Düsenring (18) an seiner hinteren Stirnseite (44) eine nut- oder stufenförmige Ringvertiefung (48) zum Einleiten und Verteilen des Mediums in die Düsenbohrungen (20) aufweist.

8. Werkzeugaufnahme nach einem der Ansprüche 1 bis 7, **dadurch gekennzeichnet, dass** der Düsenring (18) eine Mehrzahl von zwischen seiner hinteren Stirnseite (44) und seiner freien vorderen Stirnseite (46) durchgehende, in Umfangsrichtung verteilte Düsenbohrungen (20) aufweist.

9. Werkzeugaufnahme nach einem der Ansprüche 1 bis 8, **dadurch gekennzeichnet, dass** die Düsenbohrungen (20) in Durchflussrichtung des Mediums gesehen zu der Drehachse (15) hin ggf. mit unterschiedlichen Neigungswinkeln geneigt sind.

10. Werkzeugaufnahme nach einem der Ansprüche 1 bis 9, **dadurch gekennzeichnet, dass** die Austrittsöffnungen der Düsenbohrungen (20) in einem radialen Abstand von dem Werkzeugschaft (14) angeordnet sind und das Medium unter einem spitzen Winkel zu der Drehachse (15) ausstoßen.

11. Werkzeugaufnahme nach einem der Ansprüche 1 bis 10, **dadurch gekennzeichnet, dass** das Spannfutter (12) in einem den Spannbereich (28) umschließenden Spannabschnitt (52) einen durch mindestens eine Längsbohrung (50) gebildeten Zuleitungskanal (26) für das Medium aufweist, und das der Querschnitt des Zuleitungskanals (26) größer als die Summe der Querschnitte der Düsenbohrungen (20) ist.

12. Werkzeugaufnahme nach einem der Ansprüche 1 bis 11, **dadurch gekennzeichnet, dass** der Düsenring (18) mit seiner vorderen Stirnseite (46) bündig mit der Stirnfläche des Spannfutters (12) abschließt.

13. Werkzeugaufnahme nach einem der Ansprüche 1 bis 12, **dadurch gekennzeichnet, dass** der Innenmantel (36) des Düsenrings (18) ein Durchmesserübermaß gegenüber dem Spannbereich (28) aufweist.

14. Werkzeugaufnahme nach einem der Ansprüche 1 bis 13, **dadurch gekennzeichnet, dass** die Düsenbohrungen (20) durch Bohrungskanäle mit jeweils gleichbleibendem Durchmesser gebildet sind.

## Claims

1. Tool holder with a clamping chuck (12) which is driveable in a rotating manner about an axis of rotation (15), is preferably designed as a shrink fit chuck and has a hollow clamping region (28), which is accessible via an end opening (30), for clamping the tool shank (14) of a rotation tool (16), and a nozzle ring (18) which is arranged on the end side of the clamping chuck (12) and has nozzle bores (20) for acting upon the rotation tool (16) with a liquid and/or gaseous medium, wherein the nozzle ring (18) is accommodated in an annular recess (32) of the clamping chuck (12), said annular recess extending the end opening (30) in a stepped manner, wherein the nozzle ring (18) is fixed in the annular recess (32) via connecting means (34) and, with its inner shell (36), forms a radial boundary for the insertion of the rotation tool (16), **characterized in that** the nozzle ring (18) forms an axial sealing surface (56) on its rear end side (44) against passage of the medium into the clamping region (28), wherein the sealing surface (56) of the nozzle ring (18) lies directly against a stepped surface of the annular recess (32).

2. Tool holder according to Claim 1, **characterized in that** the nozzle ring (18) is fixedly connected to the clamping chuck (12) independently of the rotation tool via a releasable screw connection or a non-releasable integrally bonded connection as connecting means (34).

3. Tool holder according to Claim 1 or 2, **characterized in that** the nozzle ring (18) has an external thread (40) which is screwable into an internal thread (42) of the clamping chuck (12).

4. Tool holder according to one of Claims 1 to 3, **characterized in that** the inner shell (36) of the nozzle ring (18) has a form-fitting profile, in particular a polygonal or torx profile for engagement of a mounting tool in a manner secured against rotation.

5. Tool holder according to Claim 1 or 2, **characterized in that** the nozzle ring (18) is preferably connected non-releasably at its outer shell (38) to the clamping chuck (12) via an adhesively bonded or welded connection (58).

6. Tool holder according to Claim 5, **characterized in that** the outer shell (38) of the nozzle ring (18) and the outer edge of the annular recess (32) bound an in particular V-shaped annular notch (60) for receiving a weld seam (62).

7. Tool holder according to one of Claims 1 to 6, **characterized in that** the nozzle ring (18) has, on its rear end side (44), a groove-shaped or stepped annular depression (48) for introducing and distributing the medium into the nozzle bores (20).

8. Tool holder according to one of Claims 1 to 7, **characterized in that** the nozzle ring (18) has a plurality of nozzle bores (20) which are continuous between its rear end side (44) and its free front end side (46) and are distributed in the circumferential direction.

9. Tool holder according to one of Claims 1 to 8, **characterized in that** the nozzle bores (20) are inclined towards the axis of rotation (15), as seen in the through flow direction of the medium, optionally with different angles of inclination.

10. Tool holder according to one of Claims 1 to 9, **characterized in that** the outlet openings of the nozzle bores (20) are arranged at a radial distance from the tool shank (14) and eject the medium at an acute angle with respect to the axis of rotation (15).

11. Tool holder according to one of Claims 1 to 10, **characterized in that** the clamping chuck (12) has, in a clamping portion (52) surrounding the clamping region (28), a supply channel (26), which is formed by at least one longitudinal bore (50), for the medium, and the the cross section of the supply channel (26) is larger than the sum of the cross sections of the nozzle bores (20).

12. Tool holder according to one of Claims 1 to 11, **characterized in that** the nozzle ring (18) ends with its front end side (46) flush with the end surface of the clamping chuck (12).

13. Tool holder according to one of Claims 1 to 12, **characterized in that** the inner shell (36) of the nozzle ring (18) has an excess diameter size in relation to the clamping region (28).

14. Tool holder according to one of Claims 1 to 13, **characterized in that** the nozzle bores (20) are formed by bore channels each having a constant diameter.

## Revendications

1. Attachement d'outil comprenant un mandrin de serrage (12) pouvant être entraîné en rotation autour d'un axe de rotation (15), de préférence réalisé sous la forme d'un mandrin de frettage, lequel possède une zone de serrage (28) creuse accessible par le biais d'un orifice frontal (30) pour le serrage de la queue d'outil (14) d'un outil rotatif (16), et une bague à buse (18) disposée du côté frontal sur le mandrin de serrage (12), laquelle possède des orifices de buse (20) destinés à alimenter l'outil rotatif (16) avec un fluide liquide et/ou gazeux, la bague à buse (18) étant accueillie dans une cavité annulaire (32) du mandrin de serrage (12) qui élargit de manière étagée l'orifice frontal (30), la bague à buse (18) étant immobilisée dans la cavité annulaire (32) par le biais de moyens d'assemblage (34) et sa chemise interne (36) formant une délimitation radiale pour l'insertion de l'outil rotatif (16), **caractérisé en ce que** la bague à buse (18) forme au niveau de son côté frontal arrière (44) une surface d'étanchéité (56) axiale contre une traversée du fluide dans la zone de serrage (28), la surface d'étanchéité (56) de la bague à buse (18) reposant directement contre une surface de gradin de la cavité annulaire (32).

2. Attachement d'outil selon la revendication 1, **caractérisé en ce que** la bague à buse (18) est reliée à demeure au mandrin de serrage (12) par le biais d'un assemblage vissé amovible ou d'une liaison par fusion de matières inamovible faisant office de moyens d'assemblage (34), indépendamment de l'outil rotatif.

3. Attachement d'outil selon la revendication 1 ou 2, **caractérisé en ce que** la bague à buse (18) possède un filetage mâle (40) qui peut être vissé dans un filetage femelle (42) du mandrin de serrage (12).

4. Attachement d'outil selon l'une des revendications 1 à 3, **caractérisé en ce que** la chemise interne (36) de la bague à buse (18) possède un profil de complémentarité de formes, notamment un profil polygonal ou Torx pour une prise bloquée contre la torsion d'un outil de montage.

5. Attachement d'outil selon la revendication 1 ou 2, **caractérisé en ce que** la bague à buse (18) est reliée au mandrin de serrage (12) de manière inamovible de préférence au niveau de sa chemise extérieure (38) par le biais d'un assemblage collé ou soudé (58).

6. Attachement d'outil selon la revendication 5, **caractérisé en ce que** la chemise extérieure (38) de la bague à buse (18) et le bord extérieur de la cavité annulaire (32) délimitent une encoche annulaire (60) notamment en forme de V destinée à accueillir un cordon de soudage (62).

7. Attachement d'outil selon l'une des revendications 1 à 6, **caractérisé en ce que** la bague à buse (18) possède au niveau de son côté frontal arrière (44) un creux annulaire (48) en forme de rainure ou de gradin destiné à l'introduction et à la distribution du fluide dans les orifices de buse (20).

8. Attachement d'outil selon l'une des revendications 1 à 7, **caractérisé en ce que** la bague à buse (18) possède une pluralité d'orifices de buse (20) distribués dans le sens circonférentiel de bout en bout entre son côté frontal arrière (44) et son côté frontal avant (46).

9. Attachement d'outil selon l'une des revendications 1 à 8, **caractérisé en ce que** les orifices de buse (20), vus dans le sens de l'écoulement du fluide, sont inclinés vers l'axe de rotation (15), éventuellement avec des angles d'inclinaison différents.

10. Attachement d'outil selon l'une des revendications 1 à 9, **caractérisé en ce que** les orifices de sortie des orifices de buse (20) sont disposés à un écart radial de la queue d'outil (14) et éjectent le fluide sous un angle aigu par rapport à l'axe de rotation (15).

11. Attachement d'outil selon l'une des revendications 1 à 10, **caractérisé en ce que** le mandrin de serrage (12) possède dans une portion de serrage (52) qui entoure la zone de serrage (28) un canal d'arrivée (26) pour le fluide, formé par au moins un trou longitudinal (50), et le la section transversale du canal d'arrivée (26) est supérieure à la somme des sections transversales des orifices de buse (20).

12. Attachement d'outil selon l'une des revendications 1 à 11, **caractérisé en ce que** la bague à buse (18) se termine avec son côté frontal avant (46) à fleur de la surface frontale du mandrin de serrage (12).

13. Attachement d'outil selon l'une des revendications 1 à 12, **caractérisé en ce que** la chemise interne (36) de la bague à buse (18) présente une surcote de diamètre par rapport à la zone de serrage (28).

14. Attachement d'outil selon l'une des revendications 1 à 13, **caractérisé en ce que** les orifices de buse (20) sont formés par des canaux de perçage ayant respectivement un diamètre constant.
